(19)

Europäisches
Patentamt
European
Patent Office
Office européen
des brevets

(11) **EP 2 261 861 A1**

(12) **EUROPEAN PATENT APPLICATION**
published in accordance with Art. 153(4) EPC

(43) Date of publication:
**15.12.2010 Bulletin 2010/50**

(21) Application number: **08710402.2**

(22) Date of filing: **18.02.2008**

(51) Int Cl.:
*G06T 13/00* (2006.01)  *G01C 21/00* (2006.01)
*G06T 11/60* (2006.01)  *G08G 1/0969* (2006.01)
*G09B 29/00* (2006.01)  *G09G 5/00* (2006.01)
*G09G 5/36* (2006.01)

(86) International application number:
**PCT/JP2008/000248**

(87) International publication number:
**WO 2009/104218 (27.08.2009 Gazette 2009/35)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Mitsubishi Electric Corporation
Tokyo 100-8310 (JP)**

(72) Inventor: **YOKOSUKA, Yusuke
Tokyo 100-8310 (JP)**

(74) Representative: **Pfenning, Meinig & Partner GbR
Patent- und Rechtsanwälte
Theresienhöhe 13
80339 München (DE)**

(54) **MAP DISPLAY DEVICE**

(57)     A map display device includes a map polygonization unit 5 for converting a map to be displayed before display switching and another map to be displayed after the display switching into polygons having the same phase structure as each other, a triangulation unit 6 for dividing each of these polygons into triangles which make corresponding points between the map to be displayed before the display switching and the other map to be displayed after the display switching have an equal connection relation, and a morphing unit 7 for, when morphing a map display to perform the display switching, creating map data about an intermediate map having the same phase structure as each of the map to be displayed before display switching and the other map to be displayed after display switching.

FIG.1

EP 2 261 861 A1

**Description**

Field of the Invention

The present invention relates to a map display device used for display of a map in a car navigation system or the like.

Background of the Invention

In a car navigation system or the like, a scale change used for changing the scale of a map displayed is an indispensable function. As a conventional map display device which implements a scale change function, there is a map display device that holds a plurality of map data having different scales and sets map levels in steps for the plurality of scales of map data respectively, thereby selecting and displaying map data having a map level corresponding to the newly set scale to which the previous scale has been changed.

However, in such a map display device, the scale of the on-screen map is suddenly changed through the switching between map levels. Therefore, there is a case in which the user loses track of a road or a building which he or she has recognized on the map corresponding to the scale set before the map level switching on the map displayed after the map level switching.

In order to resolve the above-mentioned trouble, there can be considered a method of, when switching to different map data and then displaying this map data, smoothly changing the map information to be displayed from the map data displayed before the switching to the map data to be displayed after the switching. A method of smoothly changing object descriptions from a certain object to another object in this way is referred to as morphing.

Morphing is widely used in the field of computer graphics. For example, morphing is implemented by determining corresponding points between two polygons which are a source object to be morphed and a target object, and performing a linear interpolation between the corresponding points when changing from one of the polygons into the other polygon. The following malfunctions may occur in morphing using a linear interpolation.

(1) Self-intersection

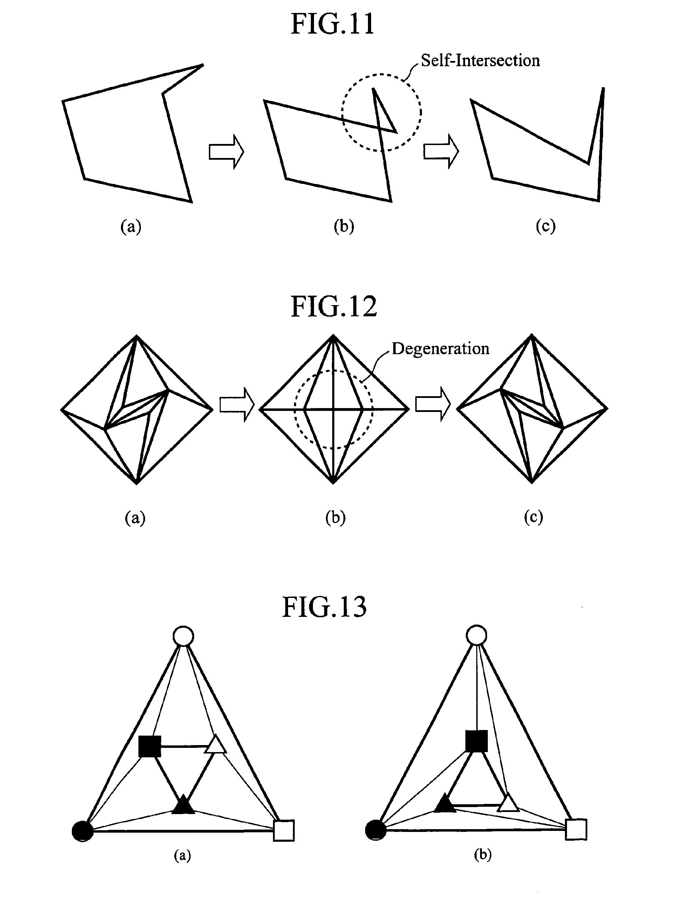

As shown in Fig. 11, a case in which a polygon (a) which is a pentagon object is morphed, via an intermediate object (b), into a polygon (c) which is a pentagon object will be considered. In this case, depending upon the results of a linear interpolation between corresponding points between the polygons (a) and (c), a self-intersection, such as a portion enclosed by a dashed line, may occur in the outline of the intermediate object (b). Because such a self-intersection shows an unnatural change when switching between maps using morphing, it is necessary to avoid occurrence of self-intersections.

(2) Degeneration

As shown in Fig. 12, a case in which a polygon (a) which is a quadrangle object consisting of a combination of a plurality of triangles is morphed, via an intermediate object (b), into a polygon (c) which is a quadrangle object will be considered. In this case, depending upon the results of a linear interpolation between corresponding points between the polygons (a) and (c), degeneration, such as a portion enclosed by a dashed line in which three vertices of some triangles in the polygon (a) are running in an identical straight line, may occur in the intermediate object (b). Because such degeneration makes an object which originally exists disappear, it is necessary to avoid occurrence of degeneration.

As a conventional technology for avoiding occurrence of self-intersections and degeneration when carrying out morphing of a polygon model, there is a method of determining triangulation which makes any corresponding points between two polygons, which are a source object to be morphed and a destination object, have an equal connection relation, and then carrying out morphing by using this triangulation (refer to nonpatent reference 1).

Fig. 13 is a view for explaining triangulation of a polygon. In Fig. 13, a black filled triangle symbol, a black filled quadrangle symbol, a black filled circle symbol, a white filled (hollow) triangle symbol, a white filled quadrangle symbol, and a white filled circle symbol show vertexes of triangles produced when triangulation of a polygon is carried out. Furthermore, two points in the polygons (a) and (b) which are expressed by each identical symbol are corresponding points between the above-mentioned polygons at the time of morphing the polygon (a) into the polygon (b).

The example shown in Fig. 13 shows a case in which triangulation expressed by an equal connection relation between any corresponding points is acquired for each of the polygons (a) and (b). By using this triangulation which makes any corresponding points between these polygons have an equal connection relation, each vertex is expressed by a convex combination of surrounding points connected to one another via sides. By carrying out a linear interpolation between vertexes each expressed by such a convex combination when changing the polygon (a) into the polygon (b), morphing without self-intersections and degeneration can be implemented.

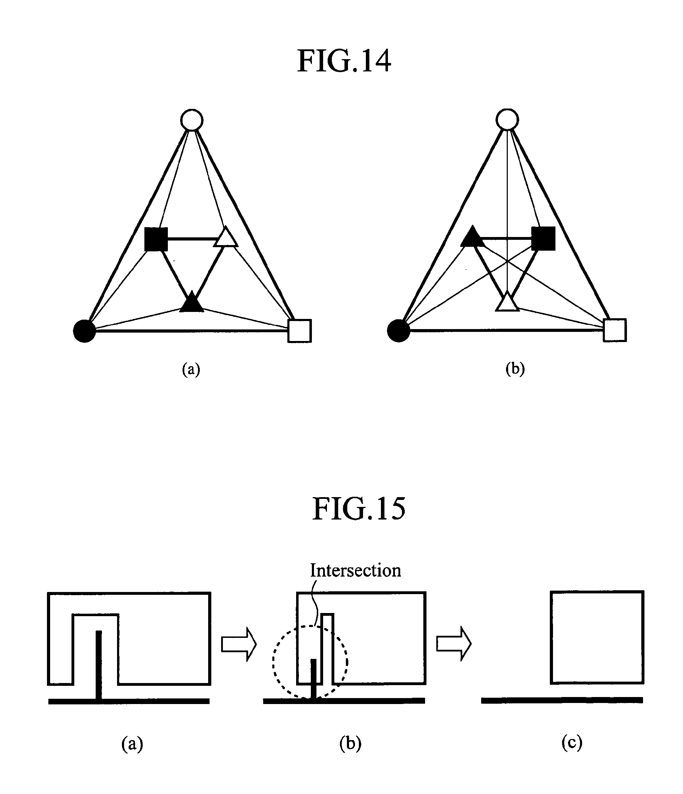

Fig. 14 is a view showing a case in which no triangulation which makes any corresponding points between polygons have an equal connection relation is acquired for the polygons. Each symbol in Fig. 14 shows a vertex of a triangle produced when performing triangulation on each of the polygons, like in the case of Fig. 13. Furthermore, two points in the polygons (a) and (b) which are expressed by each identical symbol are corresponding points between the above-mentioned polygons at the time of morphing the polygon (a) into the polygon (b). As shown in Fig. 14, unless triangles which make corresponding points between the polygons have an equal connection relation are acquired, there is a case in which triangles overlap each other or no triangle is produced even if an arithmetic operation of forcedly connecting between corresponding points when carrying out morphing is performed.

On the other hand, nonpatent reference 2 discloses a morphing technology used for switching between map displays, for example. In accordance with the morphing technology disclosed by nonpatent reference 2, morphing of polylines each of which constructs an object on a map is carried out when switching between map displays.

[Nonpatent reference 1] C. Gotsman, V. Surazhsky, "Guaranteed intersection-free polygon morphing", Computers & Graphics, 25(1), pages. 67-75, 2001.

[Nonpatent reference 2] D. Merrick, M. Nollenburg, A. Wolffand, M. Benkert, "Morphing polygonal lines: A step towards continuous generalization", Proc. 15th Annu. Geograph. Inform. Sci. Research Conf. UK(GISRUK '07), pages. 390-399, 2007.

However, when morphing an actual map, it is necessary to carry out the morphing in consideration of all objects to be drawn including buildings and roads as well as outlines, such as geographical features expressed by polylines. Therefore, the morphing process described in nonpatent reference 2 cannot be applied to any practical switching between map displays.

Furthermore, in order to implement switching between map displays using morphing, the use of a linear interpolation between corresponding points can be considered. However, in a case of morphing a detailed map (a) having a small scale into a wide-area map (c) having a large scale, as shown in Fig. 15, a self-intersection may occur between objects to be drawn, such as a road and a building or roads on an intermediate map (b), like in the above-mentioned case of morphing a polygon into another polygon. Such a self-intersection occurring in the intermediate map (b) during morphing provides an unnatural change in the display switching between the maps.

In addition, the technology disclosed by nonpatent reference 1 can be applied to switching between map displays using morphing with a linear interpolation between corresponding points. However, nonpatent reference 1 is based on that all divided triangular objects to be drawn are connected to one another, and therefore the technology cannot be applied to data such as map data about objects to be drawn, such as roads and buildings, which are scattered around an area, just as it is.

The present invention is made in order to solve the above-mentioned problems, and it is therefore an object of the present invention to provide a map display device that can use morphing to switch between map displays without reducing visibility.

Description of the Invention

A map display device in accordance with the present invention includes: a polygonization unit for converting map data displayed before display switching and map data to be displayed after the display switching into polygons having a same phase structure as each other; a triangulation unit for determining triangulation which makes corresponding points between the map displayed before the display switching and the map to be displayed after the display switching have an equal connection relation in the polygons acquired by the polygonization unit; and a morphing unit for, when morphing a map display to perform the display switching, creating map data about an intermediate map having a same phase structure as each of the map displayed before the display switching and the map to be displayed after the display switching on a basis of information about points within the polygons which are specified from results of the triangulation determined by the triangulation unit.

Because the map display device in accordance with the present invention carries out the morphing by using the map data about the intermediate map having the same phase structure as each of the map displayed before the display switching and the map to be displayed after the display switching, there is provided an advantage of being able to switch between the map displays without reducing the visibility of the displayed map.

Brief Description of the Figures

[Fig. 1] Fig. 1 is a block diagram showing the configuration of a map display device in accordance with Embodiment 1 of the present invention;

[Fig. 2] Fig. 2 is a flow chart showing a flow of a switching process of switching between map displays which is carried out by the map display device shown in Fig. 1;

[Fig. 3] Fig. 3 is a view for explaining a matching process of matching between two maps A and B;

[Fig. 4] Fig. 4 is a view for explaining a process of adding a point corresponding to each of points on which the matching between the maps A and B shown in Fig. 3 cannot be performed; [Fig. 5] Fig. 5 is a view for explaining a process of polygonizing each of the maps A and B shown in Fig. 4;

[Fig. 6] Fig. 6 is a view showing the results of dividing each of polygons respectively including the maps A and B shown in Fig. 5 into triangles which make corresponding points between the polygons have an equal connection relation;

[Fig. 7] Fig. 7 is a view for explaining a case in which it is assumed that some points and sides in the polygon including the map A shown in Fig. 5 result from polygonal degeneration; [Fig. 8] Fig. 8 is a view for explaining triangulation of only corresponding points;

[Fig. 9] Fig. 9 is a view for explaining mapping of points which cannot be matched to any points on another map;

[Fig. 10] Fig. 10 is a view showing the configuration of a map display device in accordance with Embodiment 2 of the present invention;

[Fig. 11] Fig. 11 is a view showing an example of a self-intersection;

[Fig. 12] Fig. 12 is a view showing an example of degeneration; [Fig. 13] Fig. 13 is a view for explaining triangulation of a polygon;

[Fig. 14] Fig. 14 is a view showing a case in which triangulation which makes corresponding points between objects have an equal connection relation is not acquired for the objects; and [Fig. 15] Fig. 15 is a view for explaining a self-intersection occurring during morphing a map display.

Preferred Embodiments of the Invention

Hereafter, in order to explain this invention in greater detail, the preferred embodiments of the present invention will be described with reference to the accompanying drawings.

Embodiment 1.

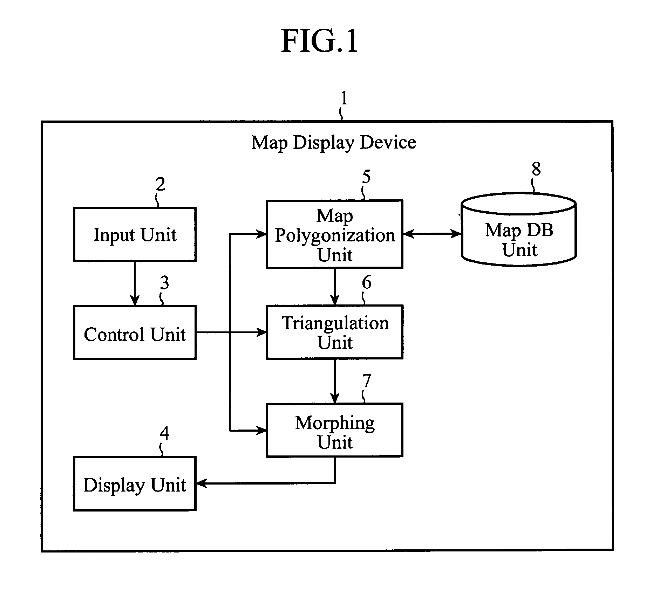

Fig. 1 is a block diagram showing the configuration of a map display device in accordance with Embodiment 1 of the present invention. In Fig. 1, the map display device 1 in accordance with Embodiment 1 is provided with an input unit 2, a control unit 3, a display unit 4, a map polygonization unit 5, a triangulation unit 6, a morphing unit 7, and a map database (DB) unit 8. The input unit 2 is a component for accepting information inputted by a user, and is comprised of hardware used for data input, such as a touch panel device, a pointing device, or a keyboard, and control software for controlling the hardware.

The control unit 3 controls the operations of the map polygonization unit 5, the triangulation unit 6, and the morphing unit 7. The display unit 4 is a component for displaying map data or the like, and can be implemented via one of various types of display devices. The map polygonization unit 5 is a component for polygonizing map data. For example, the map polygonization unit encloses the whole of a map shown by map data with a bounding box having a predetermined shape to create a polygon which is defined by the outside shape of the bounding box. The outside shape of this polygon is defined by the bounding box, and this polygon contains polygonal shapes each of which defines a drawing object showing a building or road on the map therein.

For each of the polygons respectively corresponding to the map to be displayed before the switching and the map to be displayed after the switching, the polygons being created by the map polygonization unit 5, the triangulation unit 6 determines triangulation which makes corresponding points between the polygons have an equal connection relation. The morphing unit 7 creates an intermediate map consists of drawing objects which are to be displayed while the map to be displayed before the switching changes to the map to be displayed after the switching by using triangle data acquired by the triangulation unit 6 to switch between map displays by using morphing. The map DB unit 8 is a database for holding map data about maps of a plurality of scales. For example, the map DB unit manages the map data about maps of scales while associating the scales with map levels respectively, the map levels being preset for the scales respectively.

The input unit 2, the control unit 3, the display unit 4, the map polygonization unit 5, the triangulation unit 6, the morphing unit 7, and the map DB unit 8 can be implemented, as a concrete means in which software and hardware work in cooperation with each other on a computer by, for example, causing the computer to read a program for map display processing according to the scope of the present invention and control the operation of the program.

Next, the operation of the map display device will be explained.

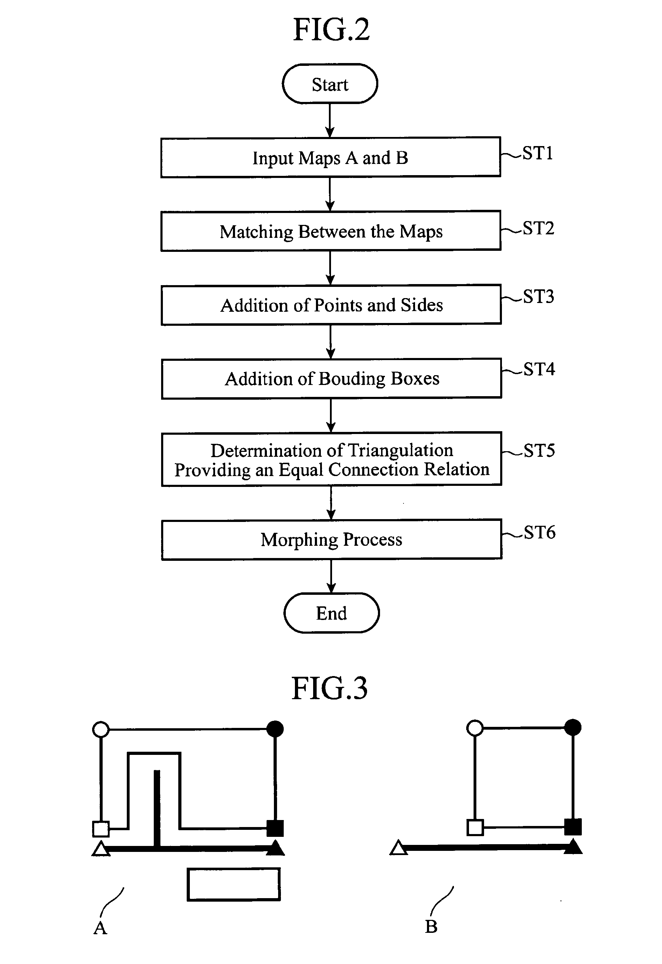

Fig. 2 is a flow chart showing a flow of a process of switching between map displays which is carried out by the map display device shown in Fig. 1, and the details of switching between map displays will be explained with reference to this flow chart. Hereinafter, a case in which switching between displays of two maps A and B which differ from each other only in their scales is carried out by using morphing will be mentioned as an example. In a case in which switching among three or more maps using morphing is carried out, what is necessary is just to extract two maps successively in order of the switching, and repeatedly carry out the switching process which will be mentioned below.

For example, the display unit 4 displays the map A to be displayed before the switching on the display screen, and also displays a GUI (Graphical User Interface) screen for selection of one of the map levels respectively set for the plurality of scales of map data in a part of the display screen. The user selects one map level corresponding to the map B according to the GUI screen for selection of one map level to input selection information about the map level into the map display device via the input unit 2.

When receiving the selection information about the map level corresponding to the map B via the input unit 2, the control unit 3 outputs both the map level corresponding to the map A to be displayed before the switching and the map level corresponding to the map B to be displayed after the switching to the map polygonization unit 5. The map polygonization unit 5 searches through the map DB unit 8 by using the map levels inputted thereto from the control unit 3 according to the operation control by the control unit 3 to input the map data about the maps A and B (step ST1).

Hereinafter, an explanation will be made by assuming that the map display device 1 in accordance with Embodiment 1 handles vector map data expressing a map as follows.

(1) A map is expressed by points and sides each connecting between points.
(2) A side can be expressed by a sequence of points. Information about such a side also includes information showing a connection relation between points included in a sequence of points.
(3) Information about each point, each side, and a set of sides (or a sequence of points) includes not only information showing their positions on a map and a connection relation among them, but also attribution information showing drawing objects constructed of those point, side and set of sides, such as a building and a road, and information specific to each attribute (e.g., a building name and a road width).

When accepting the map data about the maps A and B, the map polygonization unit 5 performs matching between the maps A and B (step ST2). In this case, the matching is a process of determining matching between points in the two maps showing each identical location. Fig. 3 is a view for explaining the process of matching between the two maps. In Fig. 3, a black filled triangle symbol, a black filled quadrangle symbol, a black filled circle symbol, a white filled triangle symbol, a white filled quadrangle symbol, and a white filled circle symbol show points which construct each of the maps A and B. Furthermore, two points expressed by each identical symbol in each of the maps A and B are corresponding points showing an identical location in both the maps A and B.

In a KIWI format for use in a car navigation system, the position coordinates of corresponding points as shown in Fig. 3 match each other. Therefore, by using the position information about corresponding points, a matching relation between two points showing any identical location between the two maps can be determined easily. Furthermore, when the position coordinates of corresponding points between the maps do not match each other, a matching process disclosed in the following reference 1 can be used.

Reference 1; JP,2002-279437,A

In the matching process disclosed by reference 1, matching between two maps is carried out hierarchically, and connection information about points is weighted by taking into consideration the attributes of objects which construct each of the maps, so that corresponding points can be determined with a higher degree of accuracy as compared with a case in which corresponding points are determined only from a distance. The present invention is not limited to the above-mentioned matching method, and another matching method can be used without departing from the scope of the present invention.

Next, the map polygonization unit 5 adds a point corresponding to any point on which the matching between the maps A and B cannot be performed (step ST3). For example, it will be assumed hereafter that the map B is a wide-area map having a large scale and the map A is a detailed map having a small scale. In this case, in the matching process, all the points of the map B which is a wide-area one can be matched to points of the map A which is a detailed one. However, there is a case in which some points of the map A remain to be matched to any points of the map B. The reasons why some points of the map A remain to be matched to any points of the map B are as follows.
(1a) Resulting from a difference in the degrees of detail of sides between the maps, points constructing a side of the map A cannot be matched to any points of the map B.
(2a) In a case in which one of the maps does not have a side corresponding to a side of the other map while sides connected to this side exist in both of the maps, points which construct the above-mentioned corresponding side cannot be matched to any points.
(3a) Because there is no corresponding object (a building, a road, or the like) in one of the maps, points which construct this object in the other map cannot be matched to any points.

Because the map display device cannot carry out a process which will be mentioned below correctly when there is no point corresponding to a point in one of the maps A and B from one of the above-mentioned reasons, the map display device needs to add a point corresponding to the point in the one of the maps A and B on which the matching cannot be performed to the other one of the maps A and B.

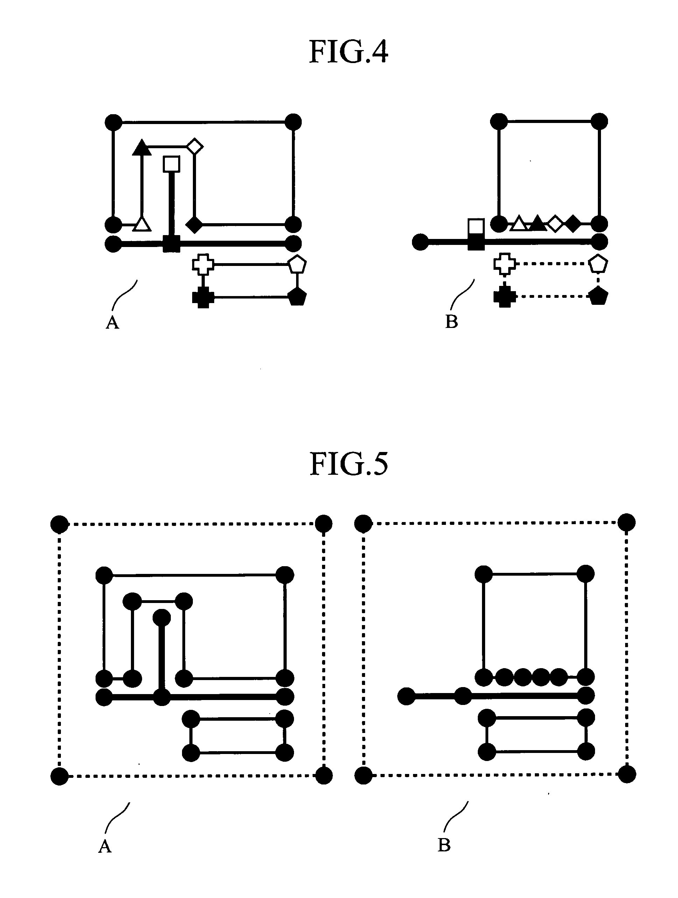

Fig. 4 is a view for explaining the process of adding a point corresponding to each of points on which the matching between the maps A and B shown in Fig. 3 cannot be performed, and shows a case in which some points in the map A (a detailed map) which remain to be matched to any points in the map B (a wide-area map) are added to the map B. Black filled triangle symbols, black filled square symbols, black filled rhombus symbols, black filled pentagon symbols, black filled circle symbols, black filled cross shape symbols, white filled triangle symbols, white filled square symbols, white filled rhombus symbols, white filled pentagon symbols, white filled circle symbols, and white filled cross shape symbols, which are shown in Fig. 4, represent points which construct the maps A and B. Two points represented by each identical symbol in the maps A and B are corresponding points showing an identical location between the maps A and B. The process of adding corresponding points will be explained with reference to Fig. 4 for each of the conditions shown in above-mentioned (1a) to (3a).

(A) In the case of (1a)

A comparison between the detailed map (map A) and the wide-area map (map B) shows that all the sides in the wide-area map are included in the detailed map. Thus, the sides existing in both of the maps A and B can be specified by using the corresponding points determined in step ST2. In contrast, an object on the detailed map (map A) and a corresponding object on the wide-area map (map B) may have different number of sides which construct these objects respectively. In a case in which the sides of an object on the detailed map have a degree of detail different from that of the sides of a corresponding object on the wide-area map in this way, the map polygonization unit 5 adds points to the object on the wide-area map (map B) in such a way that the object on the wide-area map has the same number of sides as the corresponding object on the detailed map (map A).

In the example shown in Fig. 4, a rectangular object consisting of a connection of points shown by four black-lacquered circle symbols on the map B corresponds to an octagonal object existing on the map A and having a number of sides different from that of the rectangular object. To be more specific, as sides corresponding to one side of the above-mentioned object on the map B (i.e., one side consisting of points shown by black filled circle symbols), a side formed by connecting between a point shown by the white filled triangle symbol and a point shown by the black filled triangle symbol, and a side formed by connecting between a point shown by the white filled rhombus symbol and a point shown by the black filled rhombus symbol exist on the map A.

On the map B on which the matching of step ST2 has been performed, the above-mentioned side formed by connecting between the point shown by the white filled triangle symbol and the point shown by the black filled triangle symbol, and the above-mentioned side formed by connecting between the point shown by the white filled rhombus symbol and the point shown by the black filled rhombus symbol existing on the map A do not exist. Therefore, the map polygonization unit 5 adds points corresponding to the point shown by the white filled triangle symbol, the point shown by the black filled triangle symbol, the point shown by the white filled rhombus symbol, and the point shown by the black filled rhombus symbol, which exist on the map A, onto the corresponding side of the map B (the side of the rectangle which consists of the black filled circle symbols), as shown in Fig. 4.

(B) In the case of (2a)

As shown in Fig. 4, while a side formed by connecting between the point shown by the white filled square symbol and the point shown by the black filled square symbol and existing on the map A does not exist on the map B, corresponding sides each connected to the above-mentioned side and formed by connecting between two points shown by black filled circle symbols exist between the maps A and B. In this case, the map polygonization unit 5 adds the point shown by the white filled square symbol and the point shown by the black filled square symbol, which exist on the map A and which construct the side to be processed, to the side on the map B (i.e., the side formed by connecting between the points shown by the black filled circle symbols) corresponding to the side to which the above-mentioned side to be processed is connected.

The positions on the side to which the corresponding points are added are the ones to which the above-mentioned side to be processed is connected. At this time, all the points which construct the above-mentioned side to be processed can be arranged at the same point on the map B. Thus, when the locating positions of a plurality of points match one another, a process of providing a perturbation for each of the points is performed to assume the plurality of points as different points. In the example of Fig. 4, the point shown by the white filled square symbol and the point shown by the black filled square symbol are placed at the same position on the map B, though they are described as points slightly shifted from each other by providing a perturbation for the point shown by the white filled square symbol.

(C) In the case of (3a)

On the map B on which the matching of step ST2 has been performed, an object corresponding to a rectangular object on the map A which is formed by connecting among the point shown by the white filled cross shape symbol, the point shown by the white filled pentagon symbol, the point shown by the black filled cross shape symbol, and the point shown by the black filled pentagon symbol, which are shown in Fig. 4, does not exist. In this case, the map polygonization unit 5 adds points corresponding to the point shown by the white filled cross shape symbol, the point shown by the white filled pentagon symbol, the point shown by the black filled cross shape symbol, and the point shown by the black filled pentagon symbol to positions on the map B having the same coordinates as those of the corresponding points on the map A respectively, as shown in Fig. 4. The map polygonization unit also adds sides connecting among the added points to the map B. The sides shown with the dashed lines shown in Fig. 4 are the ones newly defined by the added corresponding points.

There is a case in which a point or an object added to the wide-area map overlaps another object originally existing due to both the degree of map accuracy and a displacement resulting from a simplification which is done when creating the wide-area map from the detailed map. This problem can be solved by determining whether or not each object on the map B has an intersection with another object, and shifting a point of an object intersecting another object to the position where the object intersects the other object to remove the intersection, as described in the following reference 2.

Reference 2; M. de Berg, M. van Kreveld, M. Overmars, and O. Schwarzkopf, "Computational Geometry-Algorithms and Applications", Springer-Verlag, 2000.

The present invention is not limited to the above-mentioned methods of adding points and/or sides, as described in (A) to (C), and another adding method can be used without departing from the scope of the present invention.

Next, the map polygonization unit 5 sets a bounding box surrounding all the points and sides on each of the maps A and B on the basis of the positions of the points, the sides, and the objects on each of the maps A and B (step ST4). Accordingly, it can be assumed that the map data about each of the maps A and B are a polygon including the whole map within a frame defined by the bounding box.

Fig. 5 is a view for explaining a process of polygonizing each of the maps A and B shown in Fig. 4. In Fig. 5, each of the bounding boxes is shown by a dashed line. The bounding boxes of the maps A and B have the same outline shape and the same size as each other, as shown in Fig. 5. For example, the map polygonization unit determines rectangular bounding boxes respectively surrounding the maps A and B, and selects one of these bounding boxes having a larger size. At this time, the selected bounding box must be a rectangle completely containing all the vertexes and all the sides on each of the maps.

Because the rectangle consisting of four points is added, as the bounding box, to both the maps A and B, there is no difference in both the number of vertexes and the number of sides between the two maps A and B. Each polygon produced in the above-mentioned way has the same phase structure (topology) having the same number of points and the same connection relation among sides thereof.

Next, the triangulation unit 6 determines triangulation which makes corresponding points between the two map data, which can be assumed to be the polygons created by the map polygonization unit 5, have an equal connection relation (step ST5). As an algorithm of dividing each of the two polygons into triangles according to the triangulation which makes corresponding points between the two polygons have an equal connection relation, a method described in, for example, in reference 3 is used.

Not only in the case of using the method described in reference 3, but also in the case of using morphing using triangulation, the processing can be carried out after polygons having the same phase structure are provided. In this embodiment, because the map polygonization unit 5 creates the two map data (the maps A and B) which can be assumed to be the polygons having the same phase structure, the triangulation unit can perform triangulation on the polygons without performing any pre-processing.

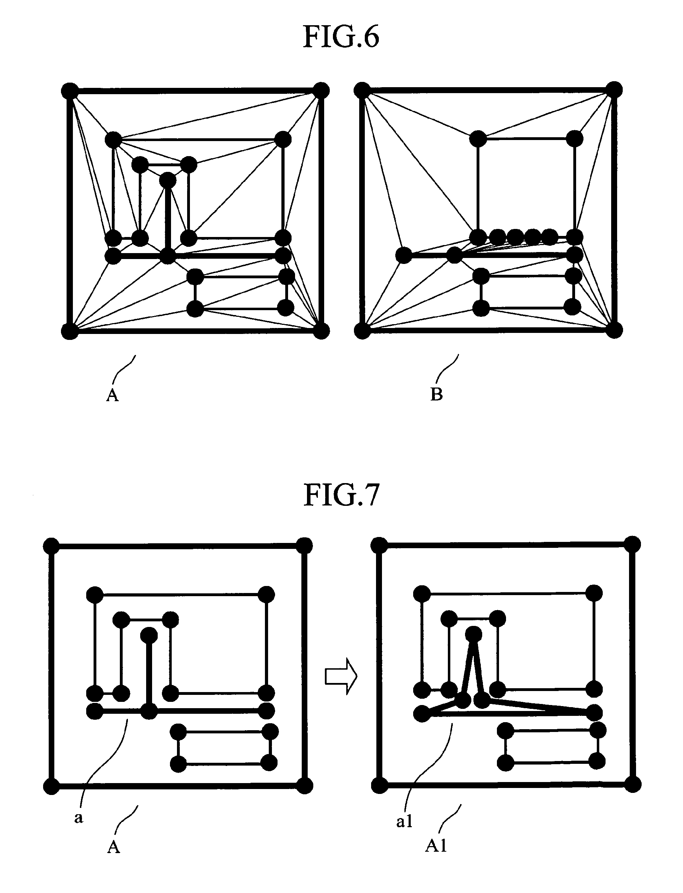

Furthermore, the method disclosed by reference 3 is limited to triangulation on a polygon with a hole, i.e., a polygon having an interior polygonal shape, and therefore an interior polygonal shape existing inside a polygon is not triangulated. In contrast, according to the present invention, it is necessary to triangulate also a polygonal shape constructed of points and sides on a polygonized map. Therefore, the map display device performs the process as described in nonpatent reference 1 on the polygonized map data so as to determine triangulation which makes corresponding points between polygonal shapes which construct the maps A and B respectively included in the two polygons have an equal connection relation, as shown in Fig. 6.

Reference 3; M. Babikov, D. L. Souvaine, R. Wenger, "Constructing piecewise linear homeomorphisms of polygons with holes", Proc. 9th Canadian Conf. Computational Geometry (CCCG '97), pages 6-10, 1997.

In addition, the triangulation method disclosed in reference 3 can be applied to points and sides other than polygonal shapes included in each of the polygons by assuming that each of them results from degeneration of a polygonal shape.

Fig. 7 is a view for explaining a case in which it is assumed that each of points and sides within the polygon including the map A shown in Fig. 5 results from degeneration of a polygonal shape. As shown in Fig. 7, there are polygonal objects each of which is a closed system formed by connecting points and sides and an open system a formed by connecting points and sides within the polygon of the map A.

The triangulation unit 6 then assumes that the open system a formed by connecting points and sides results from degeneration of a polygonal shape a1 as shown in Fig. 7, and determines the triangulation of the polygon of the map A1 including the polygonal shape a1. By thus assuming that each of such points and sides within a polygon results from degeneration of a polygonal shape, the triangulation method disclosed in reference 3 can also be applied to a case in which only sides are included in a polygon and a case in which a complicated polygonal shape exists within a polygon.

The present invention is not limited to the use of the above-mentioned triangulation method, and another algorithm capable of determining triangulation which makes corresponding points between the polygons have an equal connection relation can be applied without departing from the scope of the present invention.

The morphing unit 7 then performs the morphing process for the display switching between the maps A and B by using the results of the triangulation acquired by the triangulation unit 6 (step ST6). Concretely, the morphing unit 7 determines an intermediate map in the process of morphing the map A into the map B by using a method described in, for example, the following reference 4.

Reference 4; M. S. Floater, C. Gotsman, "How to morph tilings injectively", Journal of Computational and Applied Mathematics, 101(1-2), pages 117-129, 1999.

In order to determine an intermediate map having no self-intersections, the morphing unit 7, in step ST6, expresses each point in each of the polygons respectively showing the maps A and B with a convex combination with surrounding points connected to each point via sides. In this case, when a set of points surrounding a point $p_i$ is expressed as $n(p_i)$, a point p can be expressed, as the convex combination of n(p), by the following equation (1).

[Equation 1]

$$P_i = \sum_{p_j \in n(p_i)} \lambda_{ij} P_j \qquad (1)$$

where $p_j$ shows the position of a point in n(p), and $\lambda_{ij}$ is a coefficient in the convex combination of $p_j$ for the point $p_i$.

When the coefficients acquired at the time of expressing each point in each of the polygons with a convex combination are arranged in the form of a matrix, the coefficients can be expressed as a matrix M given by the following equation (2).

[Equation 2]

$$M = \begin{bmatrix} 0 & \lambda_{12} & \lambda_{13} & \cdots \\ \lambda_{21} & 0 & \lambda_{23} & \cdots \\ \lambda_{31} & \lambda_{32} & 0 & \cdots \\ \vdots & \vdots & \vdots & \ddots \end{bmatrix} \qquad (2)$$

The morphing unit 7 calculates the coefficient Mt of the intermediate map by a linear interpolation on matrices MA and MB of the maps A and B, each of which is expressed by the above-mentioned equation (2), according to the following equation (3).

(Equation 3) $M_t = (1-t)M_A + tM_B \qquad \cdots (3)$

The morphing unit can determine the position of each point of the intermediate map from the coefficient $M_t$

calculated according to the above-mentioned equation (3).

The parameter t which is provided at the time of the linear interpolation is set to t=0 in the case of the map A and is set to t=1 in the case of the map B (or vice versa). For example, the morphing unit can determine a map just intermediate between the map A and the map B by setting the parameter t to 0.5. The intermediate map thus produced has the same phase structure as the maps A and B, and does not have any self-intersection.

When switching between map displays, followed by a scale change, the morphing unit 7 sets a numerical value varying from 0 to 1 at a resolution according to the arithmetic performance of the map display device 1 to the parameter t in turn. Map data about the intermediate maps created in this way and leading from the map A to the map B are outputted from the morphing unit 7 to the display unit 4. As a result, a smoothly varying map display from the map A to the map B is produced on the display screen of the display unit 4.

The present invention is not limited to the above-mentioned morphing process, and another morphing processing method can be used without departing from the scope of the present invention. For example, what is necessary is just to use an algorithm of determining morphing having no intersections from triangles which make corresponding points between the polygons have an equal connection relation, as described in the following reference 5.

Reference 5;C. Erten, S. G. Kobourov and C. Pitta, "Morphing Planar Graphs", Proc. 20th Annu. Symp. Comp. Geom. (SoCG '04), pages 451-452, 2004.

Furthermore, when morphing the map A into the map B, in order to handle the points added by the map polygonization unit 5 in step ST3, the morphing unit 7 uses the value of the parameter t which is provided at the time of the linear interpolation as an alpha value. More specifically, by changing the transmissivity of corresponding points by using the alpha value, the morphing unit causes vertexes which construct a map to be displayed smoothly and gradually, thereby enabling the user to recognize the points without having a feeling that something is abnormal.

By similarly changing the transmissivity according to the alpha blend value of each of end points of each of sides which construct a map, the morphing unit can display the map in such a way that the sides appear smoothly and gradually. As a process of handling the added points, the morphing unit can carry out a process of displaying the added points when completing the morphing of the map A into the map B or displaying them in advance, for example, by controlling the time of setting the value of the parameter t. The descriptions of the morphing can be varied according to the arithmetic performance of the map display device 1, or the demands of the application when needed.

(1) Example 1 of a process of not adding any corresponding point

In the above-mentioned explanation, the process of adding a point for which no matching between the maps A and B can be found in step ST3 shown in Fig. 2 is shown. As an alternative, the following process can be performed on a point for which no matching between the maps cannot be found. It will be hereafter assumed that the displayed map is changed from the map A to the map B, and the map A is a detailed map having a small scale and the map B is a wide-area map having a large scale. More specifically, while all the points which construct the map B can be matched to points of the map A, some points which construct the map A remain to be matched to any points of the map B. However, the following process can be established even if the maps A and B have a reverse relationship.

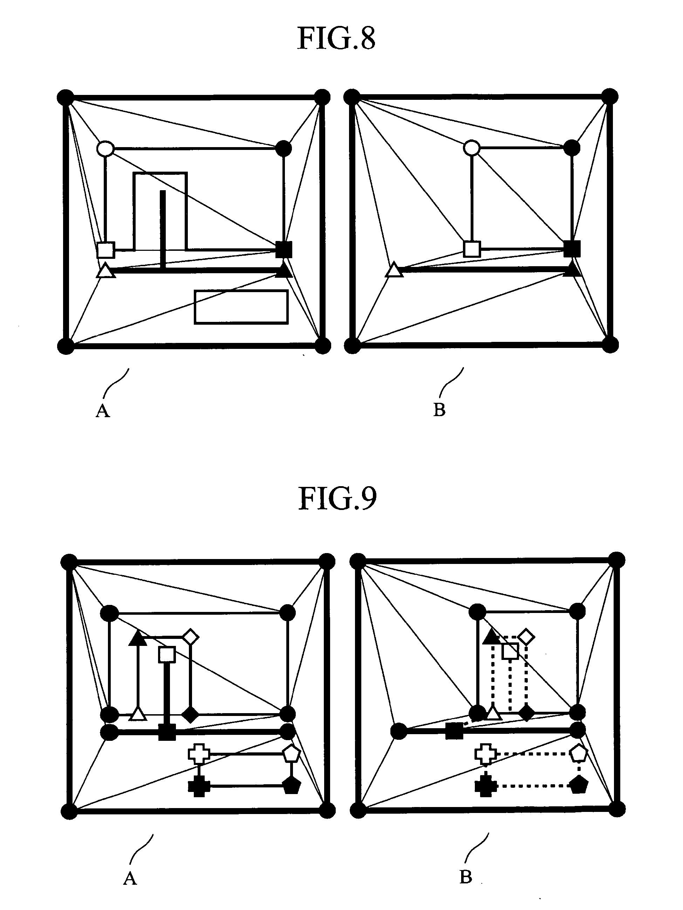

The map polygonization unit 5 omits step ST3 shown in Fig. 2, and, in step ST4, creates polygons for the maps A and B respectively without adding any corresponding points. The triangulation unit 6 inputs both the polygon of the map A and the polygon of the map B to which no corresponding points are added as shown in Fig. 8, and uses the corresponding points between the polygon of the map A and the polygon of the map B, and the sides connecting among these points to determine triangulation which makes the corresponding points between the polygons have an equal connection relation (the triangulation of only the corresponding points).

The triangles acquired as above and included in the polygon of the map A are matched to the triangles acquired as above and included in the polygon of the map B respectively. That is, a match is made between the triangles in the map A and those in the map B, as shown in Fig. 8. In contrast, points in the map A which remain to be matched to any points in the map B are included in some triangles within the polygon of the map B. Therefore, the triangulation unit 6 maps each of the above-mentioned remaining points included in some triangles within the polygon of the map A (i.e., the points in the map A which remain to be matched to any points in the map B) onto the corresponding triangle within the polygon of the map B, as shown in Fig. 9. As a method of mapping each of the above-mentioned remaining points onto the corresponding triangle, for example, affine transformation of the corresponding triangle is used.

In the example shown in Fig. 9, information about the points within the polygon of the map A, which remain to be matched to any points in the map B and which are shown by the black filled triangle symbol, the black filled square symbol, the black filled rhombus symbol, the black filled pentagon symbol, the black filled circle symbol, the black filled cross shape symbol, the white filled triangle symbol, the white filled square symbol, the white filled rhombus symbol, the white filled pentagon symbol, the white filled circle symbol, and the white filled cross shape symbol, is mapped as information about the corresponding triangles within the polygon of the map B.

By performing the same morphing process as that mentioned above on the map data in which the information about the points which remain to be matched to any points in the map B is thus mapped onto each of the triangles, the morphing processing unit 7 can implement morphing which does not produce any intersection in the display switching between the maps A and B. More specifically, the morphing processing unit can morph the points for which a match is made between the maps A and B by performing the above-mentioned morphing process without producing any self-intersections, while the morphing processing unit can express each point which remains to be matched to any point in the map B as a relative position in the corresponding triangle consisting of points for which a match is made between the maps A and B, and set whether to enable or disable the display of the point to the relative position during the process of morphing the map A into the map B.

(2) Example 2 of the process of not adding any corresponding point

Instead of carrying out the mapping of corresponding points as shown in Fig. 9, the map display device can perform blending using the above-mentioned parameter t for the linear interpolation between the maps A and B on corresponding triangles between the polygon of the map A and the polygon of the map B. For example, the map display device assumes the interior area of each triangle acquired by the triangulation unit 6 as a texture, and performs blending between corresponding triangles using the following equation (4). In the equation, TA and TB show the textures of triangles in the maps A and B respectively, and $T_t$ shows information about a texture corresponding to the parameter t.

$$\text{(Equation 4)} \quad T_t = (1-t)T_A + tT_A \quad \ldots (4)$$

The morphing unit 7 can produce a display smoothly varying from the map A to the map B by applying the above-mentioned equation (4) to all the triangles in the polygon of the map A and all the triangles in the polygon of the map B. This process can also be applied to a case in which remaining points which remain to be matched between the maps A and B are scattered over the maps. However, only the points which are matched between the maps A and B guarantee that no self-intersections are produced.

The above-mentioned examples 1 and 2 of the process are not dependent upon the number of points in each map. Therefore, the map display device does not necessarily target only the points which are matched between the maps, and can alternatively determine the number of points which guarantees that no self-intersections are produced according to the user's specification. By doing in this way, although the map display device cannot always guarantee that no self-intersections are produced, the map display device can reduce the occurrence of self-intersections as much as possible, and control the amount of processed information required to perform the morphing.

As mentioned above, the map display device according to this Embodiment 1 includes the map polygonization unit 5 for converting the map A to be displayed before display switching and the map B to be displayed after the display switching into polygons having the same phase structure as each other, the triangulation unit 6 for determining triangulation which makes corresponding points between the map A to be displayed before the display switching and the map B to be displayed after the display switching have an equal connection relation in the polygons acquired by the map polygonization unit 5, and the morphing unit 7 for, when morphing the map A into the map B to perform the display switching, creating map data about an intermediate map having the same phase structure as the map A to be displayed before the display switching and the map B to be displayed after the display switching on the basis of information about points within the polygons which are specified from the results of the triangulation determined by the triangulation unit 6. Because the map display device is configured in this way, the map display device can carry out the display switching between maps, e.g., maps having different scales, such as the display switching from the map A (e.g., a detailed map) to the map B (e.g., a wide-area map), without reducing the visibility of the displayed map.

Furthermore, in above-mentioned embodiment 1, the case in which the map data to be processed are vector map data is shown, though raster map data can be alternatively used. In this case, it is necessary to change the process of step ST2. Concretely, because a raster map does not have a concept of points, corresponding points cannot be extracted through the above-mentioned matching process.

Therefore, the user is allowed to set a corresponding point on the map by using the input unit 2. As an alternative, when a reference point on the map is known beforehand, the map display device uses the reference point as the corresponding point. Processes of step ST3 and subsequent steps after determining the corresponding point are the same as those mentioned above with reference to Fig. 2. In this case, whether or not self-intersections are produced and so on are not taken into consideration.

Embodiment 2.

In above-mentioned Embodiment 1, an example of the configuration which implements the map display device using one computer is shown. In this configuration, the morphing in the switching between map displays is carried out by performing on-line processing, i.e., by reading map data from the map DB unit 8 and then processing the map data. Because during the on-line processing, what is necessary is to hold only the map data yet to be subjected to the morphing process, the map display device can carry out the morphing process by using a minimum size of map data.

In contrast with this, a map display device according to this Embodiment 2 carries out a process including up to triangulation on map data stored in a map DB unit in advance, and holds the results of the process, and, when receiving a request to switch between map displays from the user, reads triangulated data of the map data which are associated with the switching and carries out a morphing process. More specifically, the map display device carries out the process including up to triangulation on all the map data stored in the map DB unit in an offline process, and carries out morphing by sequentially processing the triangulated data corresponding to the map data to be displayed as a map in an online process.

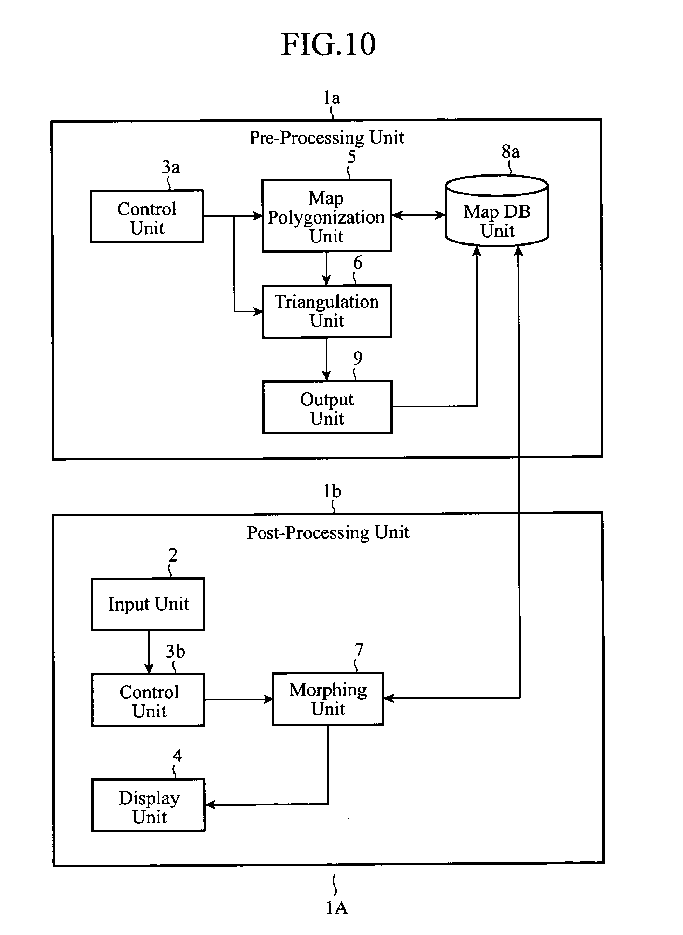

Fig. 10 is a block diagram showing the configuration of the map display device in accordance with Embodiment 2 of the present invention. In Fig. 10, the map display device 1A is provided with a pre-processing unit 1a and a post-processing unit 1b. The pre-processing unit 1a performs the process including up to triangulation on all the map data which are handled by the map display device 1A, and holds the results of the process which the pre-processing unit has performed. This pre-processing unit 1a is provided with a control unit 3a, a map polygonization unit 5, a triangulation unit 6, the map database (DB) unit 8a, and an output unit 9.

By controlling the operations of the polygonization unit 5 and the triangulation unit 6 in the pre-processing unit 1a, the control unit 3a creates triangulated data for the map data and stores the triangulated data in the map DB unit 8a. The map polygonization unit 5 and the triangulation unit 6 function in the same way that those of above-mentioned Embodiment 1 do. The output unit 9 stores the triangulated data acquired by the triangulation unit 6 in the map DB unit 8a while associating the triangulated data with the map data corresponding to these triangulated data. The map DB unit 8a is the database for holding the map data and the data acquired through the process including up to the triangulation.

The output unit 9 can add coefficients used for the morphing (the above-mentioned equations (1) to (3)) to each point of the map data stored in the map DB unit 8a. The output unit can also create and store new map data in either the map DB unit 8a or another database system.

In response to a request to switch between map displays, or the like, the post-processing unit 1b reads corresponding data stored in the map DB unit 8a and sequentially carries out the morphing process. This post-processing unit 1b is provided with an input unit 2, a control unit 3b, a display unit 4, and a morphing unit 7. The input unit 2, the display unit 4, and the morphing unit 7 function in the same way that those of above-mentioned Embodiment 1 do. The control unit 3b is a component for controlling the operation of the morphing unit 7, and causes the morphing unit to read the data corresponding to the map data which have been requested via the input unit 2 from the map DB unit 8a, and perform the morphing process.

Thus, in the map display device 1A in accordance with Embodiment 2, the pre-processing unit 1a performs the offline process including up to the creation of the triangulated data, and the post-processing unit 1b performs the online morphing process including the process of creating the intermediate map.

As mentioned above, the map display device according to this Embodiment 2 includes: the pre-processing unit 1a provided with the map polygonization unit 5 for converting the map to be displayed before display switching and the map to be displayed after the display switching into polygons having the same phase structure as each other, the triangulation unit 6 for determining triangulation which makes corresponding points between the map to be displayed before the display switching and the map to be displayed after the display switching have an equal connection relation in the polygons acquired by the map polygonization unit 5, and the map DB unit 8a for storing the results of the triangulation determined by the triangulation unit 6 therein while associating the results with corresponding map data; and the post-processing unit 1b provided with the display unit 4 for displaying map data, and the morphing unit 7 for, when morphing the map display of the display unit 4 to perform the display switching, creating map data about an intermediate map having the same phase structure as each of the map to be displayed before the display switching and the map to be displayed after the display switching on the basis of point information about points within the polygons specified from the results of the triangulation read from the map DB unit 8a. Because the map display device is configured in this way, while the data size which the map display device 1A has to hold increases compared with the configuration of above-mentioned Embodiment 1, the post-processing unit 1b has only to carry out the process of creating the intermediate map for use in the morphing. Therefore, the amount of processed information at the time of carrying out the morphing for the map display switching can be reduced.

Industrial Applicability

Because the map display device in accordance with the present invention can apply morphing to switching between maps so as to carry out switching having good visibility even when the switching is the one between maps having different scales, the map display device is suitable for map display in a car navigation system, and so on.

**Claims**

1. A map display device comprising:

a polygonization unit for converting map data displayed before display switching and map data to be displayed after the display switching into polygons having a same phase structure as each other;
a triangulation unit for determining triangulation which makes corresponding points between the map displayed before the display switching and the map to be displayed after the display switching have an equal connection relation in the polygons acquired by said polygonization unit; and
a morphing unit for, when morphing a map display to perform the display switching, creating map data about an intermediate map having a same phase structure as each of said map displayed before the display switching and said map to be displayed after the display switching on a basis of information about points within the polygons which are specified from results of the triangulation determined by said triangulation unit.

2. The map display device according to claim 1, wherein the polygonization unit searches for corresponding points between the map to be displayed before the display switching and the map to be displayed after the display switching, and, when there is a point existing only in one of said maps, adds a point corresponding to this point on the other one of said maps.

3. The map display device according to claim 1, wherein the polygonization unit sets an identical bounding box surrounding a whole of each of the maps to each of the map data to convert the map to be displayed before the display switching and the map to be displayed after the display switching into the polygons each of which is defined by an outside shape frame of said bounding box.

4. The map display device according to claim 1, wherein the morphing unit expresses each point within a polygon which is specified by results of the triangulation determined by the triangulation unit with a convex combination of surrounding points, and creates the map data about the intermediate map by using a linear interpolation of points expressed with said convex combination.

5. The map display device according to claim 1, wherein in the intermediate map, the morphing unit expresses a point existing only in one of the map to be displayed before the display switching and the map to be displayed after the display switching with a change of transmissivity.

6. The map display device according to claim 1, wherein the morphing unit maps a point existing only in one of the map to be displayed before the display switching and the map to be displayed after the display switching onto a triangle in the polygon of the other one of the maps, and creates the map data about the intermediate map in which a display at a relative position of said point specified through the mapping is changed.

7. The map display device according to claim 1, wherein the morphing unit defines, as a texture, interiors of corresponding triangles between the map to be displayed before the display switching and the map to be displayed after the display switching, which are acquired by the triangulation unit, and creates the map data about the intermediate map while carrying out blending of said textures in which transmissivity is changed.

8. The map display device according to claim 1, wherein the polygonization unit converts the map data in which corresponding points are specified in advance into the polygons having the same phase structure as each other.

9. The map display device according to claim 1, wherein the polygonization unit converts map data having different scales into polygons having a same phase structure as each other, the triangulation unit determines triangulation which makes corresponding points between said maps having different scales have an equal connection relation in the polygons acquired by said polygonization unit, and, when morphing one of said maps having different scales into the other one of said maps to perform a display switching, the morphing unit creates map data about an intermediate map on a basis of information about points within the polygons which are specified from results of the triangulation determined by said triangulation unit.

10. A map display device comprising:

a pre-processing unit having a polygonization unit for converting map data displayed before display switching and map data to be displayed after the display switching into polygons having a same phase structure as each other, a triangulation unit for determining triangulation which makes corresponding points between the map displayed before the display switching and the map to be displayed after the display switching have an equal connection relation in the polygons acquired by said polygonization unit, and a storage unit for storing results of the triangulation determined by said triangulation unit therein while associating the results with corresponding map data; and

a post-processing unit having a display unit for displaying map data, and a morphing unit for, when morphing a map display of said display unit to perform the display switching, creating map data about an intermediate map having a same phase structure as each of said map displayed before the display switching and said map to be displayed after the display switching on a basis of information about points within the polygons which are specified from the results of the triangulation determined by said triangulation unit.

# FIG.1

1

## Map Display Device

2

### Input Unit

3

### Control Unit

5

### Map Polygonization Unit

8

### Map DB Unit

6

### Triangulation Unit

7

### Morphing Unit

4

### Display Unit

# FIG.2

```
┌─────────┐
│  Start  │
└─────────┘
     │
     ▼
┌──────────────────────────────┐
│      Input Maps A and B      │─── ST1
└──────────────────────────────┘
     │
     ▼
┌──────────────────────────────┐
│    Matching Between the Maps │─── ST2
└──────────────────────────────┘
     │
     ▼
┌──────────────────────────────┐
│    Addition of Points and Sides │─── ST3
└──────────────────────────────┘
     │
     ▼
┌──────────────────────────────┐
│    Addition of Bouding Boxes │─── ST4
└──────────────────────────────┘
     │
     ▼
┌──────────────────────────────┐
│  Determination of Triangulation │─── ST5
│ Providing an Equal Connection Relation │
└──────────────────────────────┘
     │
     ▼
┌──────────────────────────────┐
│      Morphing Process        │─── ST6
└──────────────────────────────┘
     │
     ▼
┌─────────┐
│   End   │
└─────────┘
```

# FIG.3

A                    B

# FIG.4

A

B

# FIG.5

A

B

# FIG.6

A

B

# FIG.7

a

A

a1

A1

# FIG.8

A                    B

# FIG.9

A                    B

# FIG.10

1a

**Pre-Processing Unit**

3a

Control
Unit

5

Map
Polygonization
Unit

8a

Map DB
Unit

6

Triangulation
Unit

9

Output
Unit

1b

**Post-Processing Unit**

2

Input Unit

3b

Control
Unit

7

Morphing
Unit

4

Display
Unit

1A

# FIG.11

(a)          (b)          (c)

Self-Intersection

# FIG.12

(a)          (b)          (c)

Degeneration

# FIG.13

(a)          (b)

# FIG.14

(a)                    (b)

# FIG.15

Intersection

(a)                    (b)                    (c)

| | INTERNATIONAL SEARCH REPORT | International application No. |
| | | PCT/JP2008/000248 |

A. CLASSIFICATION OF SUBJECT MATTER
*G06T13/00*(2006.01)i, *G01C21/00*(2006.01)i, *G06T11/60*(2006.01)i, *G08G1/0969*
(2006.01)i, *G09B29/00*(2006.01)i, *G09G5/00*(2006.01)i, *G09G5/36*(2006.01)i

According to International Patent Classification (IPC) or to both national classification and IPC

B. FIELDS SEARCHED

Minimum documentation searched (classification system followed by classification symbols)
G06T11/00-17/50

Documentation searched other than minimum documentation to the extent that such documents are included in the fields searched
Jitsuyo Shinan Koho        1922-1996    Jitsuyo Shinan Toroku Koho    1996-2008
Kokai Jitsuyo Shinan Koho   1971-2008    Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 8-235364 A (NTT Data Communications Systems Corp.), 13 September, 1996 (13.09.96), Par. Nos. [0001], [0004], [0009], [0011] (Family: none) | 1-10 |
| Y | JP 2003-99796 A (Fuji Photo Film Co., Ltd.), 04 April, 2003 (04.04.03), Par. No. [0007] (Family: none) | 1-10 |
| Y | JP 2000-182076 A (Sony Corp.), 30 June, 2000 (30.06.00), Par. Nos. [0001], [0073] to [0080], [0180]; Fig. 13 & US 6577308 B1 | 2,5-7 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| 06 March, 2008 (06.03.08) | 18 March, 2008 (18.03.08) |

| Name and mailing address of the ISA/ | Authorized officer |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/000248

| C (Continuation). | DOCUMENTS CONSIDERED TO BE RELEVANT | |
|---|---|---|
| Category* | Citation of document, with indication, where appropriate, of the relevant passages | Relevant to claim No. |
| Y | C. Gotsman, V. Surazhsky, "Guaranteed intersection-free polygon morphing", Computer & Graphics, 2001, p.69-70 | 3 |
| Y | JP 2003-44875 A (Minolta Co., Ltd.), 14 February, 2003 (14.02.03), Par. Nos. [0039] to [0044]; Fig. 5 (Family: none) | 4 |
| Y | JP 2001-62143 A (Sega Corp.), 13 March, 2001 (13.03.01), Par. Nos. [0027] to [0033]; Fig. 9 (Family: none) | 5-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. Gotsman ; V. Surazhsky.** Guaranteed intersection-free polygon morphing. *Computers & Graphics,* 2001, vol. 25 (1), 67-75
- **D. Merrick ; M. Nollenburg ; A. Wolffand ; M. Benkert.** Morphing polygonal lines: A step towards continuous generalization. *Proc. 15th Annu. Geograph. Inform. Sci. Research Conf. UK,* 2007, 390-399
- **M. Babikov ; D. L. Souvaine ; R. Wenger.** Constructing piecewise linear homeomorphisms of polygons with holes. *Proc. 9th Canadian Conf. Computational Geometry,* 1997, 6-10
- **M. S. Floater ; C. Gotsman.** How to morph tilings injectively. *Journal of Computational and Applied Mathematics,* 1999, vol. 101 (1-2), 117-129
- **C. Erten ; S. G. Kobourov ; C. Pitta.** Morphing Planar Graphs. *Proc. 20th Annu. Symp. Comp. Geom.,* 2004, 451-452